# EUROPEAN PATENT APPLICATION

(11) **EP 4 822 137 A1**
(43) Date of publication of application: **14.10.2026**
(21) Application number: 25305531.3
(22) Date of filing: 11.04.2025
(51) Int. Cl.: E21B 43/00

(54) **A METHOD FOR ANALYZING FLOW ENTITIES IN A HYDROCARBON RESERVOIR, A COMPUTER PROGRAM PRODUCT, AND A COMPUTING DEVICE IMPLEMENTING SAID METHOD**

(71) Applicant: TotalEnergies OneTech, 92400 Courbevoie (FR)
(72) Inventor: BERGEY, Pierre, 64000 PAU (FR)
(74) Representative: Plasseraud IP

(57) **Abstract**

A method for analyzing flow entities in a hydrocarbon reservoir including steps of providing (S100) a simulation model (M) of the hydrocarbon reservoir comprising a plurality of flow entities, said simulation model being able to control flow at each flow entity independently and being able to determine an output value, and a step of determining (S200) an interference value (Vi) between a first flow entity and a second flow entity by subtracting a first output value (Vout1) determined from a first simulation via the simulation model (M), and in which in which a flow at first flow entity is controlled and flow at second flow entity is cancelled, and a second output value (Vout2) determined from a second simulation via the simulation model (M), and in which a flow a second flow entity is controlled and flow at first flow entity is cancelled, said interference value being representative of influence between first flow entity and second flow entity.

## Description

### Technical background

The present disclosure relates to a computer-implemented method for analyzing flow entities in a hydrocarbon reservoir. Flow entities are for example wells. The method finds notable application in the field of production of oil and gas or hydrogen, or in the field of carbon storage.

### Background art

Various prior documents illustrate methods of analyzing flow entities in a hydrocarbon reservoir. For example:
- *"*The Aegyo Field in Hungary: Modeling Fifteen Reservoirs with Interfering Aquifers", F. Pach; A. Gilicz; Gy. Palasthy, Paper presented at the SPE Annual Technical Conference and Exhibition, San Antonio, Texas, October 1997, Paper Number: SPE-38929-MS, proposes a material balance model for interference analysis. The model includes a plurality of reservoirs with fluid productions and fluid injections. Calculations are done by fluid migration determination.
- "Waterflood Pattern Optimization Using Genetic Algorithms with Multi-tank Material Balance", G. Zangl; R. Hermann, Paper presented at the SPE Annual Technical Conference and Exhibition, Houston, Texas, September 2004, Paper Number: SPE-90259-MS, proposes a method wherein the strength of the relationship between injection and production wells is determined from time dependent production data including basic geological information. A genetic optimization routine is then used to identify the interference strength in form of a matrix.
- *"*Using Hybrid Digital Models to Analyse Well Interference and Optimise Field Development Management", Nadir Husein; Albina Drobot; Dmitry Vasechkin; Sergey Urvantsev; Andrei Bydzan; Viacheslav Bolshakov, Paper presented at the SPE Annual Caspian Technical Conference, Nur-Sultan, Kazakhstan, November 2022. Paper Number: SPE-212120-MS, proposes to determine well interference coefficients: a proportion of water injected from a particular injection well effectively impacts producing wells located in the immediate vicinity.

These methods directly determine impact from one flow entity to another entity, by measurements or model simulations. This representation of interference matrix is not very efficient for reservoir analysis and still need to be improved.

### Summary

According to a first object, it is proposed a computer-implemented **method for analyzing flow entities in a hydrocarbon reservoir,** the method comprising:
- providing (S100) a simulation model (M) of the hydrocarbon reservoir comprising a plurality of flow entities, said simulation model being able to control flow at each flow entity independently and to determine an output value, and
- determining (S200) an interference value (Vi) between a first flow entity and a second flow entity by subtracting:
   a first output value (Vout1) determined from a first simulation via the simulation model (M), and in which in which a flow at first flow entity is controlled and flow at second flow entity is cancelled, and
   a second output value (Vout2) determined from a second simulation via the simulation model (M), and in which a flow a second flow entity is controlled and flow at first flow entity is cancelled,
   said interference value being representative of influence between first flow entity and second flow entity.

Thanks to the above features, the interference value is an accurate representative of influence between first flow entity and second flow entity, as it takes into account the flow from first flow entity to second flow entity, and the flow in the reverse direction, from second flow entity to the first flow entity. The reservoir simulation model is used very efficiently to calculate the interference values.

Moreover, interference values that are determined are more realist in view of operative conditions, for example in terms of temporal evolution of hydrocarbon reservoir.

Additionally, the interference values are less sensitive to perturbations.

Then, the interference values determined by above method can provide a simplified model of the hydrocarbon reservoir that can be easily interpreted by a human.

In various embodiments of the method, one and/or other of the following features may optionally be incorporated:
According to a variant of the method:
the first level is determined relative to a reference flow at first entity in the initial simulation,
the second level is null,
the third level is null, and
the fourth level is determined relative to a reference flow at second entity in the initial simulation.

According to a variant of the method:
the first level and the third level are determined relative to a reference flow at first flow entity in the initial simulation, and
the second level and the fourth level are determined relative to a reference flow at second flow entity in the initial simulation.

According to a variant of the method:
the interference value (Vi) is normalized between a minimum value and a maximum value.

According to a variant of the method:
- during determining interference value step (S300),

a plurality of interference values is determined between the same first flow entity and the same second flow entity, said interference values being of different nature, and
the plurality of interference values is combined into a combined interference value.

According to a variant of the method:
each output value from simulation model is a time dependent function, and
the interference value (Vi) is a time dependent function.

According to a variant of the method:
each output value from simulation model is a time dependent function, and
the interference value (Vi) is determined by time weighted averaging of the subtracted output values.

According to a variant of the method:
each output value is chosen from:
- flow value of a predetermined fluid extracted from the hydrocarbon reservoir,
- pressure value of a predetermined fluid extracted from the hydrocarbon reservoir,
- economic value of one or a plurality of predetermined fluids extracted from the hydrocarbon reservoir.

According to a variant of the method:
- building an interference matrix (Mi) in which each cell of the matrix at row (r) and column (c) register the interference value between a first entity corresponding to row (r) and a second entity corresponding to column (c).

According to a variant of the method:
- visualizing on a screen (201) a representation of the matrix (Mi), said representation being chosen from:
   a table including the interference values from the matrix,
   a graph including arrows between flow entities, each arrow having a direction corresponding to the positive value of interference value between first entity and second entity, and a feature representing the amplitude of the interference value.

According to another object, it is disclosed a **computer program product** comprising instructions which, when the program is executed by a computer, cause the computer to carry out the method of the above description.

According to another object, it is disclosed a **computing device,** comprising at least a computer and a memory, the computing device being configured to implement the method according to the above description.

### Brief description of the drawings

Other features and advantages of the invention will be apparent from the following detailed description of at least one of its embodiments given by way of non-limiting example, with reference to the accompanying drawings.

In the drawings:
- **Figure 1** illustrates a schematic view of an exploitation of a hydrocarbon reservoir in an area.
- **Figure 2** illustrates a flowchart of the method according to the present disclosure.
- **Figure 3** illustrates an example of interference matrix of said hydrocarbon reservoir
- **Figure 4** illustrates an example of visualization of interference matrix.
- **Figure 5** illustrates a a computing device configured to implement the method according to the present disclosure.

### Detailed description of at least one embodiment

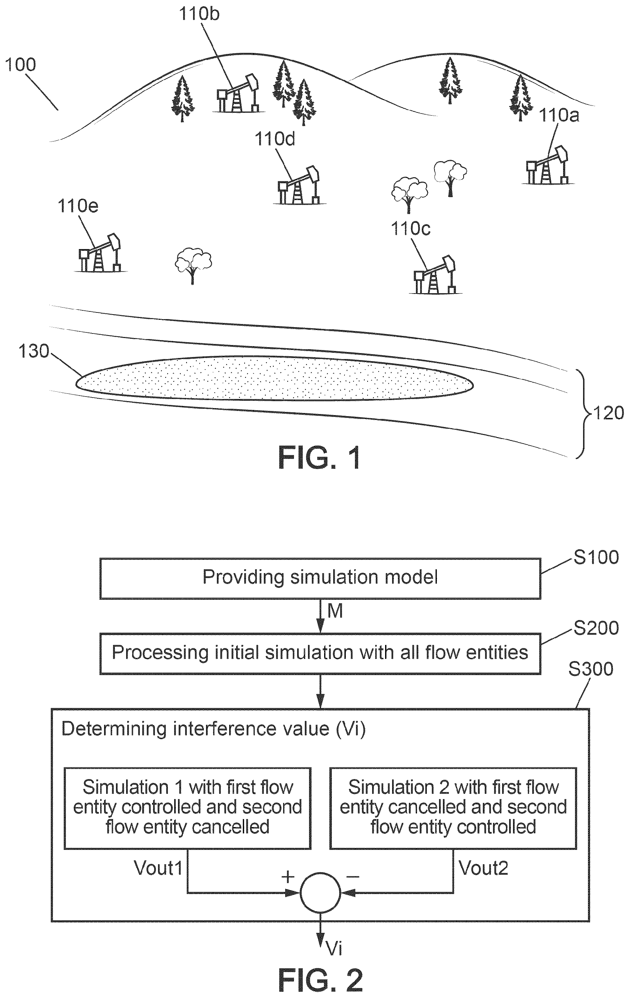

**Figure 1** illustrates a schematic view of an exploitation of a hydrocarbon reservoir in an area.

The area (or zone) 100 may be an area comprising a subsoil 120 having stratigraphic layers which may form a hydrocarbon reservoir 130 (or geological reservoir), such gas or oil for instance, and in which an exploitation is installed or will be installed or will be modified.

This hydrocarbon exploitation may have one or more flow entities 110a, 110b, 110c, 110d, 110e (or set of flow entities) to exploit the hydrocarbon reservoir 130 or in the view to exploit the hydrocarbon reservoir 130.

A "flow entity" may refer to an equipment within a reservoir that facilitates the movement, extraction, injection, or management of fluids such as oil, gas, water, carbon dioxide, hydrogen, or other substances.

In one or more embodiments, the flow entity may be at least one flow entity chosen among:
- a well or a group of wells,
- an interval open to flow along a well trajectory or a group of such intervals (drain).

A "hydrocarbon reservoir" (or a geological reservoir) may refer to a subsurface formation or a series of formations that contain accumulations of fluids such as oil, gas, water, hydrogen, or other substances, or may also be operated to store resources such as carbon dioxide or hydrogen, for instance in the context of CCUS (Carbon Capture, Utilization and Storage) and/or Geothermal (with previous presented flow entities or other types of flow entity). In the context of the present disclosure, the hydrocarbon reservoir may correspond to a real, existing reservoir for which ground data describing at least some geological and/or geometrical properties is available or can be acquired. The ground data can notably include, or be derived from, campaigns of seismic reflections, in-situ observations of geologists, satellite or aerial images, or wellbore data, including well logs, cores and plugs.

In the context of **figure 1****,** the flow entities (or set of flow entities) may be wells (or a group of wells). Wells and flow intervals might be grouped according to their usage as injector or producers. However, alternatively, the flow entities 110a, 110b, 110c, 110d, 110e may also be a set comprising one or more wells or groups of wells, and/or one or more injection wells or groups of injection wells, and/or one or more drain production intervals, etc.

In addition, in the context of the present disclosure, the flow entities can be a group of groups of flow entities.

By "producer well", it may be understood a well for which a desired fluid, such oil or gas for instance, is produced. Hence, producer wells aim at the extraction of the desired fluid which may be carried out by a drain production interval of the well producer.

By "injector well", it may be understood a well for which a fluid, such water for instance, is injected rather than produced. Injector wells, performed at a drain injection interval of the well, aim at maintaining reservoir pressure and substituting one fluid by another in the reservoir thus enhancing the production of the desired fluid at the producer wells.

Thus, it may be understood that the flow entities may interfere between them, but not necessarily. Interferences may be represented in some representations by one or more links. The interference two flow entities may be for instance characterized, among other approaches, by a time of flight between these two flow entities. A flow entity may be connected to one or more flows entities.

### Method for analyzing flow entities

**Figure 2** illustrates a flowchart of the method for analyzing flow entities in a hydrocarbon reservoir according to the present disclosure.

The method may be implemented by a computing device, such a computer or a computing server, comprising a memory and processor.

The method for analyzing flow entities comprises the following steps of:
- providing S100 a simulation model M of the hydrocarbon reservoir comprising a plurality of flow entities (110a, 110b, 110c, 110d, 110e), said simulation model being able to control flow at each flow entity independently and to determine at least one output value Vout by processing said simulation model M,
   the output value being for example a forecast of physical quantities associated to the flow at each flow entity (e.g., temperature, pressure, rate of a given phase or component),
- processing an initial simulation S200 via the simulation model M, in which all the flow entities are activated, to determine reference flows at said flow entities and at least one reference output value, and
- determining S300 at least one interference value Vi between a first flow entity and a second flow entity.

The simulation model M provided at step 100 is a model of hydrocarbon reservoir that permits to calculate or predict fluid flows at wells, flow entities and within the hydrocarbon reservoir via a flow modeling algorithm. The model M is usually identified or determined via an inversion process of said simulation model and real measurements on / in the hydrocarbon reservoir. The simulation model M might be a finite element model (FEM) or finite difference model (FDM).

Such model includes lots of properties or parameters, of subsoil 120 and reservoir 130, such as:
- geometrical values,
- material characteristics of rocks (nature, porosity, permeability, rigidity),
- fluids characteristics (nature, phase, number of phases, quantity of each phase),
- boundary values of various physical quantities (temperature, pressure).

The reservoir model or simulation model is typically comprised of a cellular grid, associated cell properties and model scale properties.

The simulation model M is usually also fed with time dependent control values provided at various time dates. The control values are for example flow of fluids Qip(t), wherein i is the number of the flow entity, t is the time, p is the phase number of the fluid (e.g. the oil, the water, the gas, etc.).

The typical output values of a simulation of simulation model M consists in a plurality of time dependent values in reservoir and /or in flow entities (wells), such as flow values, or pressure values, or temperature values.

In order to operate such simulation and to provide such output values, the simulation algorithm often includes:
- a stepping module for determining the time instants to be calculated through the simulation process of the simulation model M, and
- a core simulation module for calculating the output values between the determined time instants.

The initial simulation at step S200 then provides reference output values of any one of the output values from simulation model M processed with all flow entities activated ("on"). This initial simulation could be a simulation in nominal conditions, i.e. in conditions corresponding to real hydrocarbon reservoir 130 and real tuning of flow entities. This initial simulation might be correlated and/or tuned to measurements in the hydrocarbon reservoir 130.

The initial simulation then can also provide reference flow values (reference flows) at the flow entities. These reference flow values might be then used to control the flow at said flow entities.

### Determining an interference value

The step of determining S300 at least one interference value Vi between a first flow entity and a second flow entity will be firstly explained in a first variant that is simpler than a more generic variant.

According to this first variant, the flow entities are controlled in on/off mode, i.e. in open/closed mode. In the open mode, the flow of the concerned flow entity is controlled. In the closed mode, the flow of the concerned flow entity is cancelled: the flow entity is closed.

Then, in the step 300, the interference value Vi is calculated by subtracting:
a first output value Vout1 determined from a first simulation S1 via the simulation model M, and in which a flow at the first flow entity is controlled and a flow at the second flow entity is cancelled, and
a second output value Vout2 determined from a second simulation S2 via the simulation model M, and in which a flow at the first flow entity is cancelled and a flow at the second flow entity is controlled.

The interference value is then representative of influence between first flow entity and second flow entity.

In other words, the determined interference value Vi is: $Vi = Vout 1 - Vout 2$ where
Vout1 is a first output value from a first simulation S1, first flow entity being controlled, and second flow entity being closed; and
Vout2 is a second output value from a second simulation S2, first flow entity being closed, and second flow entity being controlled.

Thanks to the above calculation, the interference value Vi is representative of influence between first flow entity and second flow entity.

In the above calculation, the first output value and the second output value correspond to the same output from the processing of simulation model M.

For example, if the output value is a pressure at a location in the hydrocarbon reservoir:
the first output value Vout1 is this pressure at said location, generated by the first simulation S1, i.e. with operating conditions of said first simulation: first flow entity being controlled, and second flow entity being closed, and
the second output value Vout2 is this pressure at said location generated by the second simulation S2, i.e. with operating conditions of said second simulation: first flow entity being closed, and second flow entity being controlled.

The output values for subtraction in the step 300 are of the same type of output value, at the same location in the hydrocarbon reservoir.

The step of determining S300 at least one interference value Vi between a first flow entity and a second flow entity will be now explained in a more generic variant.

Then, in the step 300, the interference value Vi is calculated by subtracting:
a first output value Vout1 determined from a first simulation S1 via the simulation model M, and in which a flow at the first flow entity is controlled at a first level L11 and a flow at the second flow entity is controlled at a second level L21, and
a second output value Vout2 determined from a second simulation S2 via the simulation model M, and in which a flow at the first flow entity is controlled at a third level L12 and a flow at the second flow entity is controlled at a fourth level L22 and a flow at the.

The interference value Vi is then representative of influence between first flow entity and second flow entity.

In other words, the determined interference value Vi is still: $Vi = Vout 1 - Vout 2$ where
Vout1 is a first output value from a first simulation S1, flow at first flow entity being controlled at first level, and flow at second flow entity being controlled at second level; and
Vout2 is a second output value from a second simulation S2, flow at first flow entity being controlled at third level, and flow at second flow entity being controlled at fourth level.

Thanks to the above calculation, the interference value Vi is representative of influence between first flow entity and second flow entity.

The first level and the third level might be different one another.

The second level and the fourth level might be different one another.

More generally, in this second variant, the first level L11 and third level L12 may be determined relative to a first reference flow L1 at the first flow entity in the initial simulation. The second level L21 and fourth level L22 may be determined relative to a second reference flow L2 at the second flow entity in the initial simulation.

The first level L11 and third level L12 may be determined by a symmetry relative to a first reference flow L1 at the first flow entity. The second level L21 and fourth level L22 may be determined by a symmetry relative to a second reference flow L2 at the second flow entity.

For example, we may have the following rule: $- L 11 = L 1 + 10 % of L 1 and L 12 = L 1 - 10 % of L 1$ $- L 21 = L 2 - 10 % of L 2 and L 22 = L 1 + 10 % of L 2$

The above percentage value of 10% may be replaced by 20%, or 50%, or even 100%.

Coming back to the first variant, the first level L11, second level L21, third level L12, and fourth level L22 are:
- the first level L11 is determined relative to a reference flow at first entity in the initial simulation: i.e. a flow at the first flow entity is controlled in first simulation S1,
- the second level L21 is null: i.e. a flow at the second flow entity is cancelled in first simulation, or the second flow entity is closed,
- the third level L21 is null: i.e. a flow at the first flow entity is cancelled in the second simulation S2, or the first flow entity is closed, and
- the fourth level L22 is determined relative to a reference flow at second entity in the initial simulation: i.e. a flow at the second flow entity is controlled in the second simulation S2.

According to a variant, during determining interference value step S300, the interference value (Vi) may be then normalized between a minimum value and a maximum value. The minimum of interference value normalized maybe the null (zero) value (0). The maximum value of interference value normalized may be the one value (1).

Thanks to this step, the interference value can be interpreted more easily by a human.

According to a variant, the interference value may be transformed by dividing it by a global value. It depends on the nature of interference value. If interference value is a flow value, this interference value may be divided by a global flow.

Thanks to this step, the interference value can be interpreted more easily by a human.

According to a variant, during determining interference value step S300, a plurality of interference values is determined between the same first flow entity and the same second flow entity, said interference values being for example of different nature. Then, the plurality of interference values is combined into a combined interference value. By "combination", it is understood that the interference values are combined by elementary mathematical operation, such as addition, division, linear combination, or else.

In a first case, in which, a first interference value Vi1 is combined to a second interference value Vi2 by a linear combination operation, the combined interference value Vi should be as: Vi = a.Vi1 + b.Vi2, where a, and b are predetermined constants.

In a second case, in which, a first interference value Vi1 is combined to a second interference value Vi2 by a division operation, the combined interference value Vi should be as: Vi = a.Vi1/Vi2, where a is a predetermined constant. If the first interference value Vi1 and the second interference value Vi2 are of same nature (e.g. two flows, two pressure, etc...), the resulting combined interference value Vi becomes adimensional (without physical dimension).

Thanks to above combinations, the interference value can be interpreted more easily by a human.

As an illustration example:
- a first interference value Vi1 is an instantaneous gas rate interference value, i.e. the interference value between two flow entities of the gas rate,
- a second interference value Vi2 is an instantaneous oil rate interference value, i.e. the interference value between two flow entities of the oil rate, and
- a combined interference value Vi12 can be the instantaneous gas oil ratio by dividing the instantaneous gas rate interference value Vi1 by the instantaneous oil rate interference value Vi2.

Many other combinations of output values from the processing of simulation model M of hydrocarbon reservoir are possible and usual is the oil field.

Thanks to this combination, lots of interference values can be determine, said combined interference values being able to be interpreted by a human with his knowledge in the field.

According to a variant, during determining interference value step S300, the interference value (Vi) can be converted into another quantity.

For example, the interference value is a flow of a fluid and a price (positive or negative) of this fluid is known. Then, the physical flow of fluid can be converted into an economical gain or economical cost. Extracting oil is a gain. Extracting water is a cost.

The output value Vout determined from simulation model in first simulation S1 and in second simulation S2 may be a time dependent function. Then, the interference value Vi is also a time dependent function.

However, such time dependent output value may be time integrated to get a quantity.

In a similar way, when the interference value is time dependent, this interference value Vi may be time integrated.

In a similar way, when the output values are time dependent, the interference value Vi may be a time weighted averaging of the subtracted output values.

All these processing of output values or interference values may depend on the nature of said output values. Such processing is defined by the user knowing the field. Thanks to this processing, the interference values can be interpreted more easily by a human

For example, the output value may be chosen from:
- flow value of a predetermined fluid extracted from the hydrocarbon reservoir,
- pressure value of a predetermined fluid extracted from the hydrocarbon reservoir,
- economic value of one or a plurality of predetermined fluids extracted from the hydrocarbon reservoir.

### Interference Matrix

The hydrocarbon reservoir 130 is usually exploited by a plurality of flow entities.

The number of flow entities is greater or equal to two (2) so that interference value Vi can be determined between a first flow entity and a second flow entity.

The number of flow entities related to a hydrocarbon reservoir 130 may be greater or more than three, or five or even ten. This number can increase during the lifetime of hydrocarbon reservoir exploitation. So, this is a real problem, firstly to understand the links or influences between a plurality of flow entities in the hydrocarbon reservoir 130.

The method for analyzing flow entities may also include the following step of:
- building an interference matrix (Mi) in which each cell of the matrix at row (r) and column (c) register the interference value between a first entity corresponding to row (r) and a second entity corresponding to column (c).

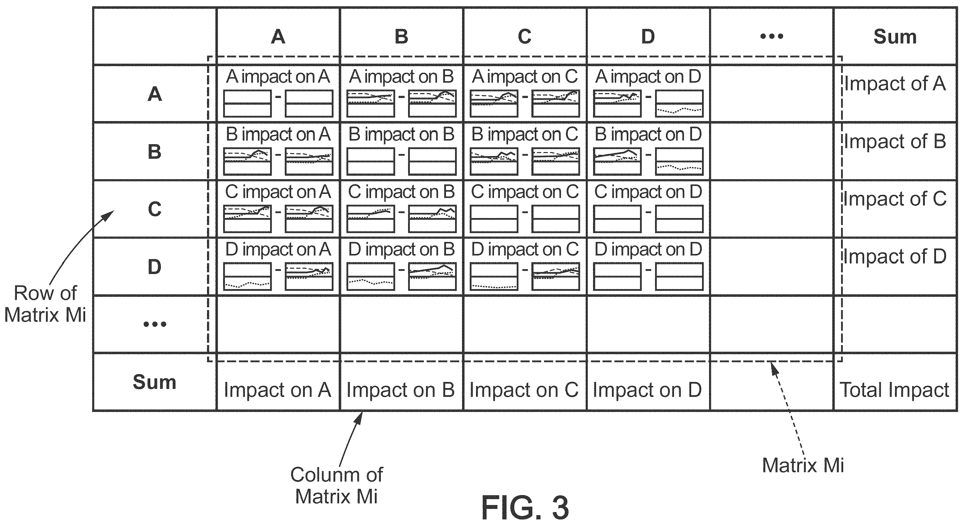

**Figure 3** is illustrating an example of such interference matrix, showing four flow entities A, B, C, D. For example, the interference value in row A column B registers the influence or impact of flow entity A on the flow entity B. This is the interference value Vi between a first entity A and a second entity B. Such interference value Vi can be determined according to any of the variants previously explained in this description.

For example, the interference value Vi is determined by subtracting a first output value Vout1 from a first simulation S1 in which only the second entity B is closed, to a second output value Vout2 from a second simulation S2 in which only the first entity A is closed.

All the cells of interference matrix are registered as explained above.

The interference matrix Mi comprises the same number of rows and columns. The interference matrix Mi is a square matrix.

The interference values on the diagonal of such interference matrix Mi are null (zero) (0), as such interference value is the subtraction of an output value to the same output value.

The interference values of cells symmetrically located relative to the matrix diagonal are of opposite sign, as subtraction is opposite.

Therefore, the interference matrix Mi as above defined is an antisymmetric matrix, such as: Mi^{T} = -Mi, where T is matrix transpose operator.

Therefore, only the upper right portion of interference matrix need to be calculated via determination of interference values, i.e. a number of N.(N-1)/2 interference values Vi, where N is the number of flow entities.

Thanks to this interference matrix Mi, the links or influences between various flow entities can be rapidly interpreted by a human by only looking the greatest values in this interference matrix.

Additionally, the **figure 3** shows:
- on the right of interference matrix Mi, a sum column, in which a cell is adding the interference values of the corresponding row. Such sum of a row of interference matrix Mi corresponds to the total influence or impact of a flow entity on all the other flow entities; and
- bellow the interference matrix Mi, a sum row, in which a cell is adding the interference value of the corresponding column. Such sum of a column of interference matrix Mi corresponds to the total influence or impact of all other flow entities on a flow entity.

The values in this additional column and row are also opposite sign when considering the diagonal of the interference matrix. Consequently, only the sum on row or on column need to be calculated.

### Use of interference matrix

The method for analyzing flow entities may also include the following step of:
- visualizing on a screen 201 a representation of the matrix Mi, said representation being chosen from:
   a table (T) including the interference values from the matrix,
   a graph (G) including arrows between flow entities, each arrow having a direction corresponding to the positive value of interference value between first entity and second entity, and a feature representing the amplitude of the interference value.

The feature of arrow is chosen from:
- a width of said arrow,
- a color of said arrow,
- a shape of said arrow, or
- a combination thereof.

Eventually, the arrow corresponding to a small interference value are not represented or displayed: i.e. interference value lower than a predetermined limit or lower than a predetermined percentage of maximum value of all interference values in the interference matrix Mi.

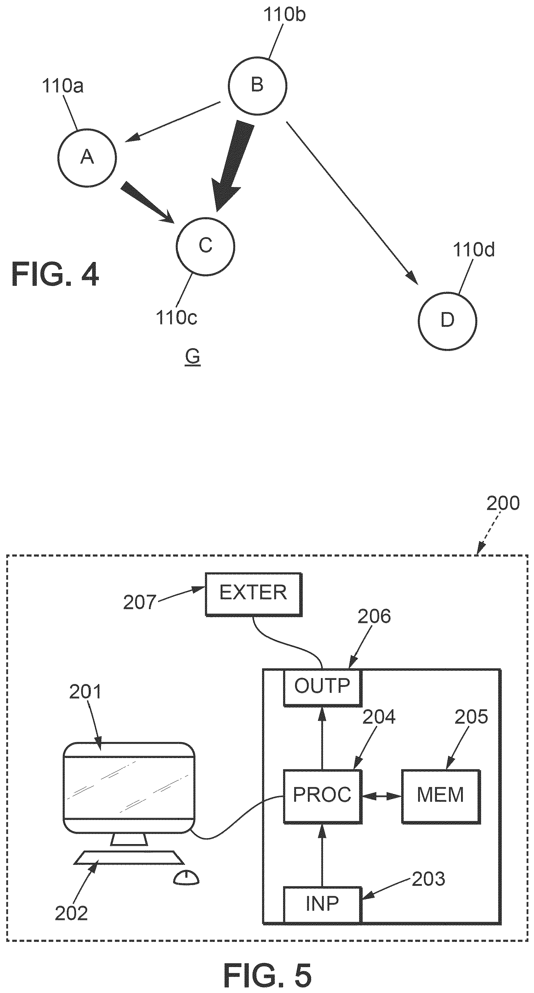

**Figure 4** give an example of a graph visualization of an interference matrix with arrows between flow entities.

Then, the method for analyzing flow entities may also include the following step of:
- determining an optimized control of flow entities using said interference matrix Mi.

The interference matrix Mi is a simplified mathematical representation of simulation model M.

Thanks to the interference matrix Mi, an optimization algorithm may be used to change the control of flow of any flow entity in the hydrocarbon reservoir. The optimization algorithm may maximize flow of oil or gas or maximize economic earn for the hydrocarbon reservoir 130.

This optimization algorithm may iterate on the interference matrix Mi without the need of calculating a full simulation of hydrocarbon reservoir. Such method is cost efficient in terms of computing load to determine the control of flow entities.

The method for analyzing flow entities may also include the following step of:
- determining an optimized location of flow entities using said interference matrix Mi.

Thanks to the interference matrix Mi, an optimization algorithm may be used to change the location of any flow entity in the hydrocarbon reservoir. The optimization algorithm may maximize flow of oil or gas or maximize economic earn for the hydrocarbon reservoir 130.

This optimization algorithm may iterate on the interference matrix Mi without the need of calculating a full simulation of hydrocarbon reservoir. Such method is cost efficient in terms of computing load to determine the position or location of flow entities.

### Computing device

**Figure 5** is a possible embodiment for a computing device that enables the present disclosure.

In this embodiment, the computing device 200 may comprise a circuit 204 and a memory 205 coupled to the circuit 204 and configured to store program instructions loadable into the circuit and adapted to cause circuit 204 to carry out the steps of the present disclosure when the program instructions are run by the circuit 204.

Memory 205 may also store data and useful information for carrying out the steps of the present disclosure as described above. In one or several examples, the memory may comprise a meshed representation of the flow entities, and/or a geological description of the hydrocarbon reservoir for building the meshed representation, and/or one or more variations parameters, and/or one or more respective values, and/or at least one application constraint, and/or at least one priority constraint, and/or at least one order constraint.

The memory may include volatile memory elements (e.g., random access memory (RAM)) and/or non-volatile memory elements (e.g., read-only memory (ROM), flash memory, hard drive, etc.). The memory may store various program modules and data, including an operating system, application programs, and the method's instructions.

The circuit 204 may be for instance:
- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising said instructions, or
- an electronic card wherein the steps of the disclosure are described within silicon, or
- a programmable electronic chip such as a FPGA chip (for « Field-Programmable Gate Array »), or
- graphics processing units (GPUs), or
- application-specific integrated circuits (ASICs).

The processor may be a single-core or multi-core processor, with each core capable of executing instructions independently. In a multi-core processor, the cores may work in parallel to perform the method's steps more efficiently.

The computing device 200 may be a computer comprising the circuit and the memory.

This computing device 200 may comprise an input interface 203 for the reception of at least one input parameter (such a geological description of the hydrocarbon reservoir for building the meshed representation, and/or a meshed representation of the flow entities, and/or one or more variations parameters, and/or one or more respective values, and/or at least one application constraint, and/or at least one priority constraint, and/or at least one order constraint, etc.) used for the above method according to the disclosure and an output interface 206 for providing at least one output parameter such those according to the present disclosure, such output parameter(s) may be provided to an external device 207 (or external computing device). For instance, the output parameters may be an order of flow entities and/or priorities of flow entities and/or an optimized control of the flow entities based on these order and priorities.

The computing device may also include a communication interface (not represented) for communicating with other devices or systems, such as a network interface card (NIC) for connecting to a local area network (LAN), wide area network (WAN), or the Internet. For instance, the communication interface may be used to receive at the input parameter(s) and/or sent output parameter(s).

To ease the interaction with the computing device such a computer, a screen 201 and a keyboard 202 may be provided and connected to the circuit 204.

In some embodiments, the computing device may be a server, a desktop computer, a laptop computer, a tablet, a smartphone, or any other suitable computing device capable of executing the method's instructions.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in be a reference to the plural and vice versa.

A person skilled in the art will readily appreciate that various parameters disclosed in the description may be modified and that various embodiments disclosed may be combined without departing from the scope of the disclosure.

## Claims

1. **A computer-implemented method for analyzing flow entities** in a hydrocarbon reservoir, the method comprising:
- providing (S100) a simulation model (M) of the hydrocarbon reservoir comprising a plurality of flow entities, said simulation model being able to control flow at each flow entity independently and to determine at least one output value by processing said simulation model,
- processing an initial simulation (S200) via the simulation model (M), in which all the flow entities are activated, to determine reference flows at said flow entities and at least one reference output value, and
- determining at least one interference value (Vi) between a first flow entity and a second flow entity by subtracting:
a first output value (Vout1) determined from a first simulation via the simulation model (M), and in which a flow at the first flow entity is controlled at a first level and a flow at the second flow entity is controlled at a second level, and
a second output value (Vout2) determined from a second simulation via the simulation model (M), and in which a flow at the first flow entity is controlled at a third level and a flow at a second flow entity is controlled at a fourth level,
said interference value being representative of influence between first flow entity and second flow entity.

2. The method according to claim 1, wherein:
the first level is determined relative to a reference flow at first entity in the initial simulation,
the second level is null,
the third level is null, and
the fourth level is determined relative to a reference flow at second entity in the initial simulation.

3. The method according to claim 1, wherein:
the first level and the third level are determined relative to a reference flow at first flow entity in the initial simulation, and
the second level and the fourth level are determined relative to a reference flow at second flow entity in the initial simulation.

4. The method according to any one of claims 1 to 3, wherein:
the interference value (Vi) is normalized between a minimum value and a maximum value.

5. The method of any one of claims 1 to 4, wherein:
- during determining interference value step (S300),
a plurality of interference values is determined between the same first flow entity and the same second flow entity, said interference values being of different nature, and
the plurality of interference values is combined into a combined interference value.

6. The method of any one of claims 1 to 5, wherein:
each output value from simulation model is a time dependent function, and
the interference value (Vi) is a time dependent function.

7. The method of any one of claim 1 to 6, wherein:
each output value from simulation model is a time dependent function, and
the interference value (Vi) is determined by time weighted averaging of the subtracted output values.

8. The method of any one of claims 1 to 7, wherein:
each output value is chosen from:
- flow value of a predetermined fluid extracted from the hydrocarbon reservoir,
- pressure value of a predetermined fluid extracted from the hydrocarbon reservoir,
- economic value of one or a plurality of predetermined fluids extracted from the hydrocarbon reservoir.

9. The method according to any one of claims 1 to 8, further comprising:
- building an interference matrix (Mi) in which each cell of the matrix at row (r) and column (c) register the interference value between a first entity corresponding to row (r) and a second entity corresponding to column (c).

10. The method according to claim 9, further comprising:
- visualizing on a screen (201) a representation of the matrix (Mi), said representation being chosen from:
a table (T) including the interference values from the matrix,
a graph (G) including arrows between flow entities, each arrow having a direction corresponding to the positive value of interference value between first entity and second entity, and a feature representing the amplitude of the interference value.

11. The method according to any one of claim 9 to 10, further comprising:
- determining an optimized control of flow entities using said interference matrix (Mi).

12. The method according to any one of claim 9 to 10, further comprising:
- determining an optimized location of flow entities using said interference matrix (Mi).

13. **A computer program product** comprising instructions which, when the program is executed by a computer, cause the computer to carry out the method of any one of the claims 1 to 12.

14. **A computing device,** comprising at least a computer and a memory, the computing device being configured to implement the method according to any one of the claims 1 to 12.
